(19) Europäisches Patentamt
European Patent Office
Office européen des brevets

(11) **EP 3 386 053 A1**

(12) **DEMANDE DE BREVET EUROPEEN**

(43) Date de publication:
**10.10.2018 Bulletin 2018/41**

(51) Int Cl.:
*H02H 3/087* [(2006.01)]     *H02M 1/32* [(2007.01)]
*H02M 3/06* [(2006.01)]     *H02H 7/12* [(2006.01)]

(21) Numéro de dépôt: **18164098.8**

(22) Date de dépôt: **26.03.2018**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(30) Priorité: **03.04.2017 FR 1752858**

(71) Demandeur: **Valeo Siemens eAutomotive France SAS**
**95800 Cergy (FR)**

(72) Inventeur: **YANG, Gang**
**92400 COURBEVOIE (FR)**

(74) Mandataire: **Argyma**
**36, rue d'Alsace Lorraine**
**31000 Toulouse (FR)**

(54) **PROCÉDÉ DE PROTECTION CONTRE UN COURANT DE SURPUISSANCE DANS UN CIRCUIT RÉSONNANT**

(57) La présente invention a pour objet un procédé de protection d'un circuit résonnant (DCDC) contre un courant de surpuissance, ledit circuit résonnant (DCDC) présentant une fréquence de commande et comprenant au moins une inductance (Lr) et deux capacités de résonnance (Cr/2), lesdites capacités de résonnance (Cr/2) présentant entre elles un point milieu, ledit procédé comprenant, pour un courant de résonnance limite (Irlim) prédéfini :
la détermination d'une tension limite (Vlim) au point milieu en fonction d'une tension d'entrée (Vin) délivrée en entrée du circuit résonnant (DCDC), de la fréquence de commande, de la valeur des capacités de résonnance (Cr/2) et du courant de résonnance limite (Irlim) prédéfini,
la détermination d'une tension (Vmp_pk) au point milieu des capacités de résonnance (CR/2),
la comparaison de la tension (Vmp_pk) au point milieu avec ladite tension limite (Vlim) déterminée,
la mise du circuit résonnant (DCDC) dans un état de défaillance en fonction de ladite comparaison de ladite tension (Vmp_pk) au point milieu avec ladite tension limite (Vlim) déterminée.

FIG. 2

**Description**

## DOMAINE TECHNIQUE ET OBJET DE L'INVENTION

De façon générale, l'invention concerne le domaine de la protection contre les surpuissances en électronique de puissance.

En particulier, la présente invention se situe dans le domaine des convertisseurs comprenant un circuit résonnant convertisseur de tension continu-continu, tel qu'un circuit résonnant. Il est connu que les composants de puissance contenus dans un tel circuit résonnant convertisseur de tension continu-continu, à savoir les capacités et surtout les inductances et les transformateurs, doivent être protégés contre des courants excessifs qui pourraient les détruire. Le procédé selon l'invention vise à protéger un circuit résonnant convertisseur de tension continu-continu contre de tels courants de surpuissance.

## ETAT DE LA TECHNIQUE

Pour protéger un circuit, en particulier dans le contexte évoqué ci-dessus où des composants de puissance - inductances, capacités - doivent être protégées contre de possibles courants de surpuissance, il est connu d'utiliser des diodes particulières appelées diodes de « clamp », autrement dit une diode de protection.

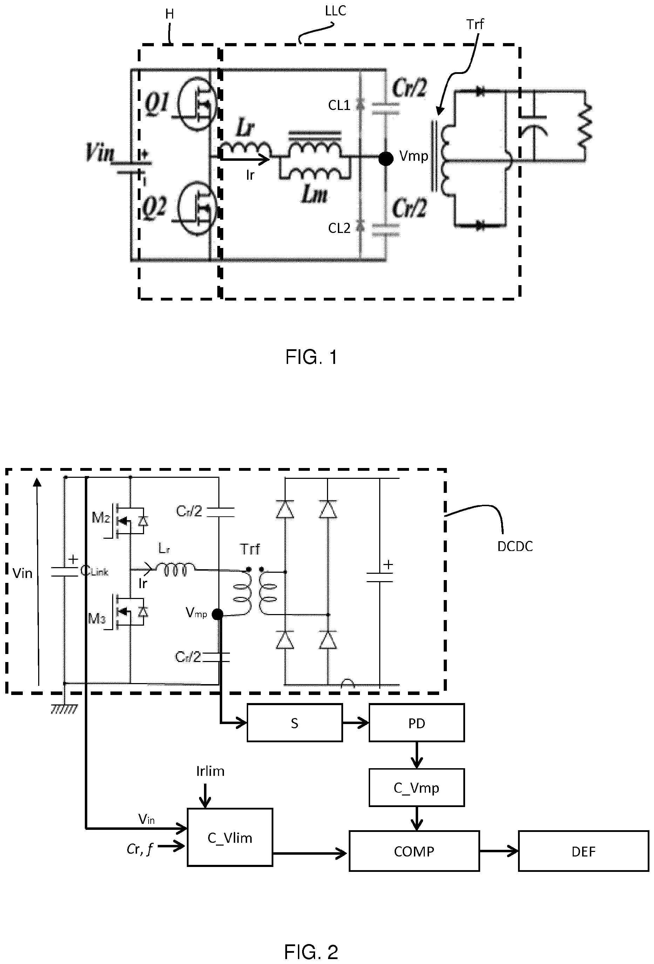

En référence à la figure 1, dans le contexte où un demi-pont en H, désigné par la lettre H sur la figure 1, commande un circuit résonnant LLC isolé commandé en fréquence, ledit circuit résonnant comprend une inductance de résonnance Lr, une inductance magnétique Lm, en série, connectées d'une part au point milieu du demi-pont en H et d'autre part à un point milieu de deux capacités de résonnance Cr/2 connectées respectivement à une borne de connexion haute et une borne de connexion basse du demi-pont en H. Le transformateur Trf, dont l'enroulement primaire se trouve, dans le mode de réalisation de la figure 1, en parallèle de inductance magnétique Lm, isole le primaire du secondaire.

Dès lors, les diodes de clamp CL1, CL2 sont connectées en parallèle des capacités de résonnance Cr/2, c'est-à-dire également entre le point milieu desdites capacités et, respectivement, la borne de connexion haute et la borne de connexion basse du demi pont en H. Les diodes de clamp ont pour fonction de limiter la tension aux bornes des capacités de résonnance Cr/2 en les court-circuitant si ladite tension est supérieure à un seuil.

En pratique, le courant qui traverse les composants de puissance est par conséquent limité.

Un intérêt de cet art antérieur, consistant à recourir à des diodes de clamp pour protéger les composants de puissance d'un circuit résonnant convertisseur de tension continu-continu contre les courants de surpuissance, réside dans sa simplicité d'implémentation.

Un inconvénient réside dans le fait que ce type de protection par diodes de clamp est par définition purement électronique. Une fois choisi le seuil de tension auquel lesdites diodes de clamp court-circuitent les capacités de résonnance, il n'est pas possible de modifier ce seuil, sauf à changer les composants. D'autre part, aucun retour n'est possible sur les raisons précises ayant provoqué l'activation des diodes de clamp.

Un autre inconvénient réside dans le coût élevé des diodes de clamp, celles-ci devant à la fois être capable de supporter des tensions élevées, au regard de l'application considérée, et être très rapides.

Il existe donc un besoin pour un procédé et un dispositif de protection d'un circuit résonnant convertisseur de tension continu-continu contre des courants de surpuissance qui permette de gérer efficacement la limitation de puissance dans le circuit résonnant convertisseur de tension continu-continu.

Dans ce contexte, la présente invention propose un procédé et un circuit associé permettant de protéger un circuit résonnant convertisseur de tension continu-continu en fonction d'une tension limite calculée en temps réel, de façon à ajuster la tension à partir de laquelle la protection du circuit résonnant convertisseur de tension continu-continu est active en fonction du besoin effectif.

## PRESENTATION GENERALE DE L'INVENTION

Plus précisément, l'invention vise un procédé de protection d'un circuit résonnant convertisseur de tension continu-continu contre un courant de surpuissance, ledit circuit résonnant convertisseur de tension continu-continu présentant une fréquence de commande et comprenant au moins une inductance et deux capacités de résonnance, lesdites capacités de résonnance présentant entre elles un point milieu, ledit procédé comprenant, pour un courant de résonnance limite prédéfini :

la détermination d'une tension limite au point milieu, en fonction d'une tension d'entrée délivrée en entrée du circuit résonnant convertisseur de tension continu-continu, de la fréquence de commande, de la valeur des capacités de résonnance et du courant de résonnance limite prédéfini,
la détermination d'une tension au point milieu des capacités de résonnance,
la comparaison de la tension au point milieu avec ladite tension limite déterminée,
la mise du circuit résonnant convertisseur de tension continu-continu dans un état de défaillance en fonction de ladite comparaison de ladite tension au point milieu avec ladite tension limite déterminée.

Dans l'art antérieur, le seuil des diodes de clamp dépend uniquement de la tension délivrée en entrée du circuit résonnant convertisseur de tension continu-continu DCDC (Vin sur la figure 1) et il n'est pas modifiable, alors que la nécessité de limiter ou non la tension des capacités de résonance Cr/2 dépend en réalité d'autres paramètres, dont la tension de sortie du circuit résonnant convertisseur de tension continu-continu (circuit résonnant LLC sur la figure 1) et la fréquence de commande du circuit.

Le procédé et le dispositif selon l'invention de protection d'un circuit résonnant convertisseur de tension continu-continu contre des courants de surpuissance permettent d'ajuster en temps réel le seuil utilisé pour limiter la tension des capacités de résonnance.

Grâce au procédé selon l'invention, la protection d'un circuit résonnant convertisseur de tension continu-continu contre des courants de surpuissance est rendue plus sûre et mieux maîtrisée. En outre, la présente invention permet de ne pas recourir à des diodes de clamp, composants onéreux, ce qui induit un gain sur le plan économique.

Selon un mode de réalisation, la tension limite Vlim est déterminée au moyen de la formule suivante :

$$Vlim = \frac{Vin}{2} + \sqrt{2}\frac{1}{2\pi fCr}Irlim$$

où Vin est la tension d'entrée délivrée en entrée du circuit résonnant convertisseur de tension continu-continu, Cr/2 est la valeur de chaque capacité de résonnance du circuit résonnant convertisseur de tension continu-continu, lesdites capacités de résonnance étant de même valeur, f est la fréquence de commande du circuit résonnant convertisseur de tension continu-continu et Irlim est le courant de résonnance limite prédéfini.

Selon un mode de réalisation, la tension au point milieu est une tension déterminée au moyen d'un dispositif de détection de pic de tension au point milieu.

Avantageusement, les étapes de comparaison de la tension mesurée au point milieu avec la tension limite déterminée et de mise du circuit résonnant convertisseur de tension continu-continu dans un état de défaillance, en fonction de ladite comparaison, consistent en :

    la mise en place d'un avertissement si la tension au point milieu devient supérieure à la tension limite déterminée,
    la mise du circuit résonnant convertisseur de tension continu-continu dans un état de défaillance si l'avertissement reste mis en place pendant une durée prédéfinie, par exemple comprise entre 5 et 10 secondes,
    l'effacement de l'avertissement si la tension au point milieu devient inférieure à la tension limite déterminée multipliée par un coefficient inférieur ou égal à 1, de préférence compris entre 0,8 et 0,9.

Selon un mode de réalisation, la mise du circuit résonnant convertisseur de tension continu-continu dans un état de défaillance est commandée si la tension mesurée au point milieu est supérieure à la tension limite déterminée.

Selon un mode de réalisation, la mise du circuit résonnant convertisseur de tension continu-continu dans un état de défaillance comprend l'arrêt du circuit résonnant convertisseur de tension continu-continu.

La présente invention vise également un dispositif de protection contre un courant de surpuissance pour un circuit résonnant convertisseur de tension continu-continu, ledit circuit résonnant convertisseur de tension continu-continu présentant une fréquence de commande et comprenant au moins une inductance et deux capacités de résonnance, lesdites capacités de résonnance étant de même valeur et présentant entre elles un point milieu, ledit dispositif de protection comprenant :

    un circuit de mesure d'une tension d'entrée Vin délivrée au circuit résonnant convertisseur de tension continu-continu,
    un circuit de mesure pour mesurer une tension au point milieu des capacités de résonnance,
    un circuit de détermination d'une tension limite Vlim au point milieu en fonction de la formule suivante :

$$Vlim = \frac{Vin}{2} + \sqrt{2}\frac{1}{2\pi fCr}Irlim$$

    où Vin est la tension d'entrée délivrée en entrée du circuit résonnant convertisseur de tension continu-continu, Cr/2 est la valeur de chaque capacité de résonnance du circuit résonnant convertisseur de tension continu-continu, f est la fréquence de commande du circuit résonnant convertisseur de tension continu-continu et Irlim est le courant de résonnance limite prédéfini,
    un circuit de comparaison de la tension au point milieu avec la tension limite déterminée,
    un circuit de mise en état de défaillance du circuit résonnant convertisseur de tension continu-continu en fonction de ladite comparaison.

Avantageusement, ledit circuit de mesure de la tension au point milieu des capacités de résonnance comprend un circuit de détection de pics comprenant un pont diviseur de tension résistif pour abaisser la tension issue du point milieu, ledit pont diviseur de tension résistif délivrant une tension entre l'anode d'une diode et l'extrémité d'une branche comprenant une capacité et une résistance en parallèle, l'autre extrémité de la branche étant connectée à la cathode de la diode.

L'invention vise par ailleurs un système électrique comprenant un circuit résonnant et un dispositif de protection dudit circuit résonnant, ledit dispositif de protection étant tel que brièvement décrit c-dessus.

Avantageusement, dans un tel système électrique, les capacités de résonnance sont connectées entre ledit point milieu et, respectivement, une borne de connexion haute et une borne de connexion basse du circuit résonnant.

L'invention vise aussi un système de chargeur électrique destiné à la charge d'une batterie, notamment d'un véhicule, comprenant un système électrique tel que brièvement décrit ci-dessus.

## DESCRIPTION DES FIGURES

L'invention sera mieux comprise à la lecture de la description qui va suivre, donnée uniquement à titre d'exemple, et se référant aux dessins annexés sui représentent :

- la figure 1, le schéma d'un exemple de dispositif de protection d'un circuit résonnant au moyen de diodes de clamp, selon l'état de l'art,
- la figure 2, le schéma fonctionnel du procédé et du dispositif de protection selon l'invention,
- la figure 3, le schéma électronique d'un exemple de détecteur de pics utilisé dans le cadre de la présente invention.

## DESCRIPTION DETAILLEE DE L'INVENTION

Il est rappelé que la présente invention est décrite ci-après à l'aide de différents modes de réalisation non limitatifs et est susceptible d'être mise en oeuvre dans des variantes à la portée de l'homme du métier, également visées par la présente invention.

En référence à la figure 2, la présente invention propose un procédé et un dispositif pour protéger un circuit résonnant convertisseur de tension continu-continu DCDC contre des courants de surpuissance. Selon le mode de réalisation de la figure 2, le circuit résonnant DCDC comprend un circuit de résonnance et un redresseur avec, entre eux, un transformateur Trf.

Le circuit résonnant DCDC présente une entrée, comprenant une borne d'entrée haute et une borne d'entrée basse entre lesquelles est délivrée une tension d'entrée Vin, une capacité Clink étant connectée entre lesdites bornes d'entrée haute et basse. Ladite tension d'entrée Vin peut notamment être délivrée par un convertisseur alternatif-continu, tel qu'un convertisseur à correction de facteur de puissance, dans le contexte d'un chargeur électrique par exemple.

Notamment, le circuit résonnant DCDC comprend des interrupteurs M2, M3 configurés pour commuter à ladite fréquence de commande de façon à contrôler l'énergie circulant dans le circuit de résonnance. Lesdits interrupteurs M2, M3 sont par exemple des transistors bipolaires à grille isolée, désignés IGBT selon l'acronyme en anglais signifiant « Isolated Gate Bipolar Transistor », ou des transistors à effet de champ à grille isolée, désignés MOSFET selon l'acronyme en anglais signifiant « Métal Oxide Semiconductor Field Effect Tansistor ».

Les interrupteurs M2, M3 forment un demi-pont en H, de sortent qu'ils sont destinés à être commandés en opposition de phase. Autrement dit, lorsque l'interrupteur M2 est ouvert, l'interrupteur M3 est fermé, et réciproquement. Par conséquent, lorsque l'interrupteur M2 est ouvert, l'interrupteur M3 étant fermé, la capacité Cr/2 reliée à la borne d'entrée basse du circuit est connectée en parallèle avec l'inductance de résonnance Lr ; l'autre capacité de résonnance Cr/2, reliée à la borne d'entrée haute du circuit, se trouve dans ce cas connectée en série avec ladite inductance de résonnance Lr et ladite capacité Cr/2 reliée à la borne d'entrée basse du circuit. Réciproquement, lorsque l'interrupteur M3 est ouvert, l'interrupteur M2 étant fermé, la capacité Cr/2 reliée à la borne d'entrée haute du circuit est connectée en parallèle avec l'inductance de résonnance Lr ; l'autre capacité de résonnance Cr/2, reliée à la borne d'entrée basse du circuit, se trouve dans ce cas connectée en série avec ladite inductance de résonnance Lr et la dite capacité Cr/2 reliée à la borne d'entrée haute du circuit.

Un objectif de la présente invention réside dans la protection d'un tel circuit résonnant DCDC contre des courants de surpuissance.

Il est entendu que l'on entend par « courant de surpuissance », dans un circuit tel qu'un circuit résonnant, un courant de résonnance dépassant un seuil prédéfini. Un tel seuil prédéfini, dans le contexte 'un chargeur électrique pour véhicule, est typiquement de l'ordre de 35 A.

Ces courants de surpuissance, c'est-à-dire ces courants de résonnance dont la valeur excède les courants de fonctionnement maximaux autorisés pour ces composants, stressent les composants concernés et peuvent provoquer leur usure prématurée, voire leur destruction.

L'inductance de résonnance Lr et les capacités de résonnance Cr/2, ainsi que d'éventuels autres composants de puissance, tel qu'une inductance magnétique (non représentée) par exemple, sont protégées, selon l'invention, en fonction de la détermination d'une tension limite Vlim au point milieu des capacités de résonnance Cr/2. Ladite tension limite Vlim correspond à une tension maximale autorisée au point milieu des capacités de résonnance Cr/2. Cette tension limite Vlim est définie de manière à garantir la protection des composants de puissance du circuit résonnant DCDC.

Ladite tension limite Vlim est notamment fonction de la tension d'entrée Vin, délivrée aux bornes d'entrée du circuit résonnant DCDC. Selon l'invention, la tension limite Vlim dépend également de la fréquence f de commutation du circuit convertisseur, de la valeur des capacités de résonnance Cr/2, ces dernières étant notamment égales.

En outre, toujours selon l'invention, la tension limite Vlim dépend d'un courant de résonnance limite Irlim prédéfini. Ce courant de résonnance limite Irlim prédéfini correspond à une valeur maximale, choisie, que le courant traversant les composants de puissance du circuit résonnant DCDC ne doit pas dépasser. En effet, de façon générale, on entend par courant de résonnance le courant $I_R$ qui traverse les composants de puissance du circuit résonnant DCDC, à savoir le courant Ir traversant l'inductance de résonnance Lr sur la figure 2.

Selon un mode de réalisation, la tension limite Vlim est calculée au moyen de la formule suivante, par un circuit C_Vlim de détermination de la tension limite Vlim :

$$Vlim = \frac{Vin}{2} + \sqrt{2}\,\frac{1}{2\pi f Cr}\,Irlim$$

où Vin est la tension d'entrée délivrée en entrée du circuit résonnant, Cr/2 est la valeur de chaque capacité de résonnance du circuit résonnant, lesdites capacités de résonnance étant de même valeur, f est la fréquence de commande du circuit résonnant et Irlim est le courant de résonnance limite prédéfini.

La tension Vin, selon un mode de réalisation, est mesurée au moyen d'un circuit de mesure de la tension d'entrée.

Selon un mode de réalisation, la tension au point milieu des capacités de résonnance est déterminée au moyen d'un circuit de mesure de la tension au point milieu des capacités de résonnance. Selon une variante, ledit circuit de mesure de la tension au point milieu comprend un capteur S adapté pour mesurer la tension du point milieu, un circuit de détection de pic PD auquel la tension mesurée par le capteur S est délivrée, et un circuit de détermination d'un pic de tension Vmp_pk au point milieu, à comparer à la tension limite Vlim.

Le circuit de détection de pic PD permet de déterminer la valeur maximum Vmp_pk de la forme d'onde de la tension Vmp mesurée par le capteur S sur une période de temps prédéfinie paramétrable.

Le pic de tension Vmp_pk au point milieu est comparé, au moyen du circuit de comparaison COMP, à la tension limite Vlim.

En fonction du résultat de cette comparaison, dans le cas où le pic de tension Vmp_pk mesurée au point milieu impliquerait un risque qu'un courant de surpuissance ne traverse les composants de puissance, le circuit résonnant DCDC est mis dans un état de défaillance, au moyen d'un circuit de mise en état de défaillance DEF. Selon un mode de réalisation, la mise du circuit résonnant DCDC dans un état de défaillance consiste notamment en l'arrêt dudit circuit.

En particulier, si la détection de pic de tension au point milieu montre une tension supérieure à Vlim, le circuit est mis dans un état de défaillance. Notamment, ladite mise dans un état de défaillance comprend notamment l'arrêt du circuit résonnant DCDC.

Selon un mode de réalisation préféré, par ailleurs, la mise dans un état de défaillance du circuit résonnant n'est réalisée que si le pic de tension Vmp_pk mesurée au point milieu reste supérieur à la tension limite Vlim pendant une durée prédéterminée.

Selon un mode de réalisation, la mise dans un état de défaillance du circuit résonnant, une fois la tension limite Vlim dépassée par le pic de tension Vmp_pk mesurée au point milieu, n'est réalisée que si la tension Vmp mesurée au point milieu reste supérieure à une valeur proche de la tension limite Vlim, correspondant par exemple à 80% ou à 90% de ladite tension limite Vlim, pendant une durée prédéterminée. Dans ce cas, une loi d'hystérésis est mise en oeuvre.

Pour la mise en oeuvre d'une telle loi d'hystérésis, la comparaison du pic de tension Vmp_pk mesurée au point milieu avec la tension limite Vlim et la mise du circuit résonnant DCDC dans un état de défaillance, en fonction de ladite comparaison, consistent par exemple en :

la mise en place d'un avertissement si le pic de tension Vmp_pk mesurée au point milieu devient supérieure à la tension limite Vlim,
la mise du circuit résonnant DCDC dans un état de défaillance si l'avertissement reste mis en place pendant une durée prédéfinie, par exemple comprise entre 5 et 10 secondes,
l'effacement de l'avertissement si le pic de tension Vmp_pk mesurée au point milieu devient inférieure à la tension limite Vlim multipliée par un coefficient inférieur ou égal à 1, de préférence compris entre 0,8 et 0,9.

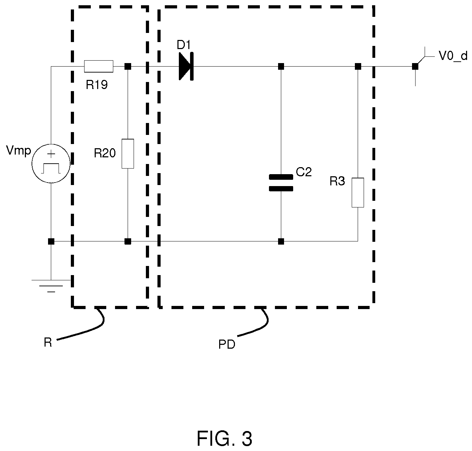

La figure 3 montre un exemple d'implémentation d'un circuit de détection de pic, pour permettre la détermination du pic de tension Vmp_pk au point milieu des capacités de résonance Cr/2.

Ledit circuit de mesure de la tension au point milieu des capacités de résonnance Cr/2 consiste dans ce cas en un circuit de détection de pics comprenant un pont diviseur de tension résistif R pour abaisser la tension Vmp issue du point milieu, ledit pont diviseur de tension résistif R délivrant une tension entre l'anode d'une diode D1 et l'extrémité d'une branche comprenant une capacité C2 et une résistance R3 en parallèle, l'autre extrémité de la branche étant connectée à la cathode de la diode D1. Ladite diode D1, ensemble la capacité C2 et la résistance R3 forment le module de détection de pic du circuit de détection de pic.

Dans le mode de réalisation représenté à la figure 3, le pont diviseur de tension résistif R comporte deux résistances R19 et R20 configurées pour diviser la tension Vmp mesurée dans le circuit par le capteur de tension S représenté schématiquement à la figure 2. Dans un exemple d'application, R19 est choisie égale à 400 k$\Omega$ et R20 égale à 2,2 k$\Omega$. Dans cet exemple, la capacité C2 est choisie égale à 1 nF et R3 égale à 200 k$\Omega$.

En sortie d'un tel circuit de détection de pic, la tension V0_d est délivrée au module de calcul C_Vmp pour détermination de la valeur maximale de la tension au point milieu, afin que cette valeur maximale de la tension Vmp_pk soit comparée à la tension limite Vlim, conformément au procédé précédemment décrit.

**Revendications**

1. Procédé de protection d'un circuit résonnant convertisseur de tension continu-continu (DCDC) contre un courant de surpuissance, ledit circuit résonnant convertisseur de tension continu-continu (DCDC) présentant une fréquence de commande (f) et comprenant au moins une inductance (Lr) et deux capacités de résonnance (Cr/2), lesdites capacités de résonnance présentant entre elles un point milieu, ledit procédé comprenant, pour un courant de résonnance limite (Irlim)prédéfini :

   la détermination d'une tension limite (Vlim) au point milieu, en fonction d'une tension d'entrée (Vin) délivrée en entrée du circuit résonnant convertisseur de tension continu-continu (DCDC), de la fréquence de commande (f), de la valeur des capacités de résonnance (Cr/2) et du courant de résonnance limite (Irlim) prédéfini,
   la détermination d'une tension (Vmp_pk) au point milieu des capacités de résonnance (Cr/2),
   la comparaison de la tension (Vmp_pk) au point milieu avec ladite tension limite (Vlim) déterminée,
   la mise du circuit résonnant convertisseur de tension continu-continu (DCDC) dans un état de défaillance en fonction de ladite comparaison de ladite tension (Vmp_pk) au point milieu avec ladite tension limite (Vlim) déterminée.

2. Procédé selon la revendication 1, dans lequel la tension limite (Vlim) est déterminée au moyen de la formule suivante :

$$Vlim = \frac{Vin}{2} + \sqrt{2}\frac{1}{2\pi f Cr}Irlim$$

   où Vin est la tension d'entrée délivrée en entrée du circuit résonnant convertisseur de tension continu-continu, Cr/2 est la valeur de chaque capacité de résonnance du circuit résonnant convertisseur de tension continu-continu, lesdites capacités de résonnance étant de même valeur, f est la fréquence de commande du circuit résonnant convertisseur de tension continu-continu et Irlim est le courant de résonnance limite prédéfini.

3. Procédé selon l'une des revendications précédentes, dans lequel la tension (Vmp_pk) au point milieu est une tension déterminée au moyen d'un dispositif de détection (PD) de pic de tension au point milieu.

4. Procédé selon l'une des revendications précédentes, dans lequel les étapes de comparaison de la tension (Vmp_pk) au point milieu avec la tension limite (Vlim) déterminée et de mise du circuit résonnant convertisseur de tension continu-continu (DCDC) dans un état de défaillance, en fonction de ladite comparaison, consistent en :

   la mise en place d'un avertissement si la tension (Vmp_pk) au point milieu devient supérieure à la tension limite (Vlim) déterminée,
   la mise du circuit résonnant convertisseur de tension continu-continu (DCDC) dans un état de défaillance si l'avertissement reste mis en place pendant une durée prédéfinie, par exemple comprise entre 5 et 10 secondes,
   l'effacement de l'avertissement si la tension (Vmp_pk) au point milieu devient inférieure à la tension limite (Vlim) déterminée multipliée par un coefficient inférieur ou égal à 1, de préférence compris entre 0,8 et 0,9.

5. Procédé selon l'une des revendications 1 à 3, dans lequel la mise du circuit résonnant convertisseur de tension continu-continu (DCDC) dans un état de défaillance est commandée si la tension (Vmp_pk) au point milieu est supérieure à la tension limite (Vlim) déterminée.

6. Procédé selon l'une des revendications précédentes, dans lequel la mise du circuit résonnant convertisseur de tension continu-continu (DCDC) dans un état de défaillance comprend l'arrêt dudit circuit résonnant convertisseur de tension continu-continu (DCDC).

7. Dispositif de protection contre un courant de surpuissance pour un circuit résonnant convertisseur de tension continu-continu (DCDC), ledit circuit résonnant convertisseur de tension continu-continu (DCDC) présentant une fréquence de commande (f) et comprenant au moins une inductance (Lr) et deux capacités de résonnance (Cr/2), lesdites capacités de résonnance (Cr/2) étant de même valeur et présentant entre elles un point milieu, ledit dispositif de protection comprenant :

   un circuit de mesure d'une tension d'entrée Vin délivrée au circuit résonnant convertisseur de tension continu-continu (DCDC),
   un circuit de mesure pour mesurer une tension (Vmp_pk) au point milieu des capacités de résonnance (Cr/2),
   un circuit (C_Vlim) de détermination d'une tension limite Vlim au point milieu en fonction de la formule suivante :

$$Vlim = \frac{Vin}{2} + \sqrt{2}\frac{1}{2\pi f Cr}Irlim$$

   où Vin est la tension d'entrée délivrée en entrée du circuit résonnant convertisseur de tension continu-continu, Cr/2 est la valeur de chaque capacité de résonnance du circuit résonnant convertisseur de tension continu-continu, f est la fréquence de commande du circuit résonnant convertisseur de tension continu-continu et Irlim est le courant de résonnance limite prédéfini,

un circuit de comparaison (COMP) de la tension (Vmp_pk) au point milieu avec la tension limite (Vlim) déterminée,

un circuit (DEF) de mise en état de défaillance du circuit résonnant convertisseur de tension continu-continu (DCDC) en fonction de ladite comparaison.

**8.** Dispositif selon la revendication précédente, dans lequel ledit circuit de mesure de la tension au point milieu des capacités de résonnance comprend un circuit (PD) de détection de pics comprenant un pont diviseur de tension résistif (R) pour abaisser la tension issue du point milieu, ledit pont diviseur de tension résistif (R) délivrant une tension entre l'anode d'une diode (D1) et l'extrémité d'une branche comprenant une capacité (C2) et une résistance (R3) en parallèle, l'autre extrémité de la branche étant connectée à la cathode de la diode (D1).

**9.** Système électrique comprenant un circuit résonnant et un dispositif de protection dudit circuit résonnant, ledit dispositif de protection étant selon l'une des revendications 7 à 8.

**10.** Système électrique selon la revendication précédente, dans lequel les capacités de résonnance (Cr/2) sont connectées entre ledit point milieu et, respectivement, une borne de connexion haute et une borne de connexion basse du circuit résonnant.

**11.** Système de chargeur électrique destiné à la charge d'une batterie, notamment d'un véhicule, comprenant un système électrique selon l'une des revendications 9 à 10.

FIG. 1

FIG. 2

FIG. 3

Europäisches
Patentamt

European
Patent Office

Office européen
des brevets

**RAPPORT DE RECHERCHE EUROPEENNE**

Numéro de la demande

EP 18 16 4098

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | WO 2016/001545 A1 (VALEO SYS CONTROLE MOTEUR SAS [FR]) 7 janvier 2016 (2016-01-07) * abrégé * * figure 1 * * page 7, ligne 15 - page 8, ligne 30 * ----- | 1-11 | INV. H02H3/087 H02M1/32 H02M3/06 H02H7/12 |
| A | US 2012/020118 A1 (TAKAKI KAZUTAKA [JP]) 26 janvier 2012 (2012-01-26) * abrégé * * figure 9 * * alinéa [0027] * * alinéa [0073] - alinéa [0077] * ----- | 1-11 | |
| A | US 2015/155704 A1 (KIKUCHI HIROKI [JP]) 4 juin 2015 (2015-06-04) * abrégé * * figure 3 * * alinéa [0077] - alinéa [0078] * ----- | 1-11 | |

**DOMAINES TECHNIQUES RECHERCHES (IPC)**

H02H
H02M

Le présent rapport a été établi pour toutes les revendications

| Lieu de la recherche | Date d'achèvement de la recherche | Examinateur |
|---|---|---|
| Munich | 13 août 2018 | Operti, Antonio |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................................

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 18 16 4098

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-08-2018

| Document brevet cité au rapport de recherche | Date de publication | Membre(s) de la famille de brevet(s) | Date de publication |
|---|---|---|---|
| WO 2016001545 A1 | 07-01-2016 | EP 3161949 A1<br>FR 3023085 A1<br>WO 2016001545 A1 | 03-05-2017<br>01-01-2016<br>07-01-2016 |
| US 2012020118 A1 | 26-01-2012 | CN 102347690 A<br>JP 5699470 B2<br>JP 2012029395 A<br>US 2012020118 A1 | 08-02-2012<br>08-04-2015<br>09-02-2012<br>26-01-2012 |
| US 2015155704 A1 | 04-06-2015 | JP 6220249 B2<br>JP 2015107028 A<br>US 2015155704 A1 | 25-10-2017<br>08-06-2015<br>04-06-2015 |

EPO FORM P0460

Pour tout renseignement concernant cette annexe : voir Journal Officiel de l'Office européen des brevets, No.12/82